# EUROPEAN PATENT SPECIFICATION

(11) **EP 0 662 488 B1**
(45) Date of publication and mention of the grant of the patent: **17.11.1999**
(21) Application number: 95100132.0
(22) Date of filing: 05.01.1995
(51) Int. Cl.: C08G 59/68

(54) **Epoxy-resin composition**
Epoxydharzzusammensetzung
Composition de résine époxyde

(30) Priority: 07.01.1994 JP 41994
(43) Date of publication of application: 12.07.1995
(73) Proprietor: Ajinomoto Co., Inc., Tokyo 104 (JP)
(72) Inventor: Abe, Chikara, c/o Central Research Laboratories, Kawasaki-ku, Kawasaki-shi, Kanagawa-ken (JP); Ohashi, Junji, c/o Central Research Laboratories, Kawasaki-ku, Kawasaki-shi, Kanagawa-ken (JP); Hirai, Kiyomiki, c/o Central Research Laboratories, Kawasaki-ku, Kawasaki-shi, Kanagawa-ken (JP)
(74) Representative: Strehl Schübel-Hopf & Partner

(56) References cited:
- FR-A- 1 419 754
- US-A- 4 558 076
- PATENT ABSTRACTS OF JAPAN vol. 13, no. 487 (C-649) 6 November 1989 & JP-A-01 190 725 (ASAHI DENKA) 31 July 1989
- PATENT ABSTRACTS OF JAPAN vol. 6, no. 244 (C-138) 2 December 1982 & JP-A-57 145 121 (DAINIHON JIYUSHI) 8 September 1982
- PATENT ABSTRACTS OF JAPAN vol. 15, no. 403 (C-0875) 15 October 1991 & JP-A-03 166 284 (MATSUSHITA ELEC) 18 July 1991
- DATABASE WPI Derwent Publications Ltd., London, GB; AN 82-27072E & JP-A-57 034 118 (DAINIPPON JUSHI) 24 February 1984

## Description

### Industrial Field of the Invention

The present invention relates to a novel one-liquid-type epoxy-resin composition. More precisely, it relates to a one-liquid-type epoxy-resin composition with excellent storage stability, which can be rapidly cured under heat to give a cured resin with excellent properties.

### Prior Art

Epoxy resins are cured with an acid-anhydride-type hardener or with a polyamine-type hardener, etc. to give cured resins having excellent electrical, mechanical and chemical properties, and these are used in various fields of electric insulating materials, various shaped products, adhesives, coating compositions, etc. Epoxy resin compositions which are generally used at present are of a two-component type comprising a base component consisting essentially of an epoxy resin and a hardener component consisting essentially of an acid anhydride, a polyamine compound, etc. Two-component-type epoxy-resin compositions can be cured at room temperature or at low temperatures, while, on the other hand, the pot life of the resin mixture to be prepared by mixing the two components is limited. Therefore, workers must prepare the compositions freshly each time they need them. The preparation of the compositions, entails a troublesome process requiring precisely weighing the components and mixing and stirring them. Therefore, the working efficiency when using the compositions is often poor. In addition such operations often cause errors. Moreover, since the remainder of the composition cannot be stored as it is, it must be discarded. Thus, the compositions of this type have various drawbacks.

In order to overcome these drawbacks, some one-liquid type epoxy-resin compositions have heretofore been proposed. For instance, mentioned are epoxy-resin compositions containing latent hardeners such as dicyandiamides, dibasic acid dihydrazides, boron trifluoride-amine adducts, guanamines, melamines, etc. However, dicyandiamides dibasic acid dihydrazides and guanamines are defective in that they require high temperatures of 150 °C or higher as well as a long period of time for curing the epoxy resins, although they do have good storage stability; while boron trifluoride-amine adducts cannot be considered satisfactory in practical use since they have high moisture absorbability and have negative influences on the properties of the cured resins and, additionally, they corrode metals. In view of the current situation as described above, it has been desirable to provide epoxy-resin compositions that have both good storage stability at room temperature and rapid curability and which can be cured to give cured products having excellent properties.

To overcome the above-mentioned problems, methods have been proposed for using, as the hardener, a so-called solid-dispersing amine-adduct-type latent hardener obtained, for example, by reacting various amine compounds with epoxy compounds, etc. by an addition reaction. For example, mentioned is a method of using a hardener obtained by reacting a dialkylamine and an epoxy resin, such as that proposed in Japanese Patent Laid-Open Nos. 56-155222 and 57-100127; a method of using a hardener obtained by melt-masking a reaction product obtained from an N,N-dialkylaminoalkylamine and an epoxy resin with a polyphenol compound, such as that proposed in Japanese Patent Laid-Open No. 61-228018; a method of using a hardener obtained by contacting a powdery amine having a tertiary amino group with a polyisocyanate, such as that proposed in Japanese Patent Publication No. 3-70736; a method of using a hardener obtained by reacting an N,N-dialkylaminoalkylamine, a cyclic amine having one or two active hydrogen atoms in the molecule and a diisocyanate in the presence of an epoxy resin as the third component, having two or more epoxy groups in one molecule, such as that proposed in Japanese Patent Laid-Open No. 3-296525; and a method of using a hardener obtained by reacting a phenol or alcohol having a tertiary amino group and an epoxy resin, such as that proposed in Japanese Patent Publication No. 1-60164. However, the solid-dispersing latent hardeners obtained by the above-mentioned methods were still not satisfactory in practical use, even though they have curability at low temperature and storage stability. In addition, these are defective in that their storage stability is noticeably lowered by the epoxy resins to be used or by the additives such as diluents etc. to be added thereto. Thus these compositions were not always satisfactory.

In order to further overcome these drawbacks, a composition has been proposed containing a solid-dispersing latent hardener, the particle surface of which has been treated with an aluminum alcoholate or an aluminum chelate compound (Japanese Patent Laid-Open No. 63-223027). However, this composition was not sufficiently satisfactory in terms of storage stability.

FR-A-1 419 754 discloses compositions comprising a cycloaliphatic polyepoxy compound containing at least one 1,2-epoxide group in a 5-membered ring, a hardener and a titanium alkoxide accelerator. The polyepoxide to be cured has to contain at least one epoxide group in a 5-membered ring in order to effectively function as an accelerator of the curing reaction.

JP-A-1 190 725 discloses a storage stable composition comprising an epoxy resin and a curing agent formed by reaction of an epoxy/amine adduct with a phenolic compound and a titanium alkoxide. The titanium alkoxides used contain polar groups, e.g. carbonyl groups, to confer hydrophilicity to the compounds, which is necessary to use said compounds as coupling agents.

JP-A-3 166 284 discloses compositions comprising a polyepoxide, an imidazole-diepoxide adduct and a titanium alkoxide. The titanium alkoxide is used as a coupling agent and therefore has to contain polar groups.

Given this situation, it has been highly desirable to provide an easy-to-produce, one-liquid-type epoxy-resin composition which has good storage stability and rapid curability at low temperature, without being influenced by the epoxy resins used and by the additives such as diluent, etc. to be added thereto, and which can be cured to give cured products having excellent properties.

### Problems to be Solved by the Invention

The problem underlying the present invention is to provide an easy-to-produce, one-liquid-type epoxy-resin composition which has good storage stability and rapid curability at low temperature, without being negatively affected by the epoxy resins used and by the additives such as diluent, etc. to be added thereto, and which can be cured to give cured products having excellent electrical properties, mechanical properties and chemical properties.

### Means for Solving the Problem

The present inventors, after assiduous research have provided a one-liquid-type epoxy-resin composition which contains titanium and/or zirconium alkoxide(s) and which is free from the above-mentioned problems. Accordingly, they have completed the present invention.

Specifically, the present invention provides an epoxy resin composition containing, as essential components, (1) an epoxy resin having two or more epoxy groups in one molecule, with the exclusion of epoxy resins having a 1,2-epoxy group in a five-membered ring, (2) a solid-dispersing, amine-adduct-type latent hardener, which is a solid insoluble in epoxy resins at room temperature, while being soluble in epoxy resins under heat to function as a hardener for said epoxy resins, and (3) titanium and/or zirconium alkoxide(s) with the proviso that said titanium alkoxides do not contain groups other than alkoxide groups.

Examples of epoxy resins are polyglycidyl ethers obtained by reacting polyphenols, such as bisphenol A, bisphenol F, bisphenol AD, catechol, resorcinol, etc., or polyalcohols, such as glycerin, polyethylene glycol, etc., and epichlorohydrin; glycidyl ether esters obtained by reacting hydroxycarboxylic acids, such as p-hydroxybenzoic acid, β-hydroxynaphthoic acid, and epichlorohydrin; polyglycidyl esters obtained by reacting polycarboxylic acids, such as phthalic acid, terephthalic acid, and epichlorohydrin; and epoxidated phenol-novolak resins, epoxidated cresol-novolak resins, epoxidated polyolefins, alicyclic epoxy resins, and other urethane-modified epoxy resins, etc. However, the present invention is not limited to these.

The solid-dispersing amine-adduct-type latent hardener to be used in the present invention is a solid insoluble in epoxy resins at room temperature, while being soluble in epoxy resins under heat to function as a hardener for them. As examples of the hardener of this type, mentioned are reaction products from amine compounds and epoxy compounds (amine-epoxy adduct-type hardeners), reaction products from amine compounds and isocyanate compounds or urea compounds (urea adduct type hardeners), and modified products obtained by treating the surfaces of these hardeners with isocyanate compounds or with acid compounds.

As examples of the epoxy compound to be used as the raw material for producing the latent hardener for use in the present invention, mentioned are polyglycidyl ethers obtained by reacting polyphenols, such as bisphenol A, bisphenol F, catechol, resorcinol, etc., or polyalcohols, such as glycerin, polyethylene glycol, and epichlorohydrin; glycidyl ether esters obtained by reacting hydroxycarboxylic acids, such as p-hydroxybenzoic acid, β-hydroxynaphthoic acid, and epichlorohydrin; polyglycidyl esters obtained by reacting polycarboxylic acids, such as phthalic acid, therephthalic acid, and epichlorohydrin; glycidylamine compounds obtained from 4,4'-diaminodiphenylmethane, m-aminophenol, etc.; polyfunctional epoxy compounds such as epoxydated phenol-novolak resins, epoxydated cresol-novolak resins, epoxydated polyolefins, etc.; monofunctional epoxy compounds such as butyl glycidyl ether, phenyl glycidyl ether, glycidyl methacrylate, etc. However, the present invention is not limited to these.

The amine compound to be used as the raw material for producing the latent hardener for use in the present invention may be any one which has, in one molecule, one or more active hydrogen atoms capable of reacting with an epoxy group or an isocyanate group by the addition reaction and which has, in one molecule, at least one or more substituents selected from primary amino groups, secondary amino groups and tertiary amino groups. Examples of the amine compound of this type are mentioned below, which, however, are not intended to limit the present invention.

As examples, mentioned are primary or secondary amines having tertiary amino group(s) in the molecule, for example, amine compounds such as diethylene-triamine, triethylene-tetramine, n-propylamine 2-hydroxyethylaminopropylamine, cyclohexylamine, dimethylaminopropylamine, dibutylaminopropylamine, dimethylaminoethylamine, diethylaminoethylamine, N-methylpiperazine, etc., and imidazole compounds such as 2-methylimidazole, 2-ethylimidazole, 2-ethyl-4-methylimidazole, 2-phenylimidazole, etc.; as well as alcohols, phenols, thiols, carboxylic acids, hydrazides, etc. having tertiary amino group(s) in the molecule, such as 2-dimethylaminoethanol, 1-methyl-2-dimethylaminoethanol, 1- phenoxymethyl -2-dimethylaminoethanol, 2-diethylaminoethanol, 1-butoxymethyl-2-dimethylaminoethanol, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimidazole, 1-(2-hydroxy-3-butoxypropyl)-2-ethyl-4-methylimidazole, 1-(2-hydroxy-3-phenoxypropyl)-2-phenylimidazoline, 1-(2-hydroxy-3-butoxypropyl)-2-phenylimidazoline, 2-(dimethylaminomethyl)phenol 2,4,6-tris(dimethylaminomethyl)phenol, N-β-hydroxyethylmorpholine, 2-dimethylaminoethanethiol 2-mercaptopyridine, 2-mercaptobenzimidazole, 2-mercaptobenzothiazole, 4-mercaptopyridine, N,N-dimethylaminobenzoic acid, N,N-dimethylglycine, nicotinic acid, isonicotinic acid, picolinic acid, N,N-dimethylglycine hydrazide, N,N-dimethylpropionic acid hydrazide, nicotinic acid hydrazide, isonicotinic acid hydrazide, etc.

In preparing the latent hardener for use in the present invention by reacting the above-mentioned epoxy compound and the amine compound by an addition reaction, an active hydrogen compound having two or more active hydrogens in one molecule can be added to the reaction system as the third component. As examples of the active hydrogen compound of this type, there are mentioned polyphenols such as bisphenol A, bisphenol F, bisphenol S, hydroquinone, catechol, resorcinol, pyrogallol, phenol-novolak resins, etc.; polyalcohols such as trimethylolpropane, etc.; amines such as triethylene-tetramine, cyclohexylamine, piperazine, aniline, etc.; polycarboxylic acids such as adipic acid, phthalic acid, etc.; as well as 1,2-dimercaptoethane, 2-mercaptoethanol, 1-mercapto-3-phenoxy-2-propanol, mercaptoacetic acid, anthranilic acid, lactic acid, etc. However, the present invention is not limited to these.

As examples of the isocyanate compound to be used for preparing the latent hardener for use in the present invention, mentioned are monofunctional isocyanate compounds such as n-butyl isocyanate, isopropyl isocyanate, phenyl isocyanate, benzyl isocyanate, etc.; polyfunctional isocyanate compounds such as hexamethylene diisocyanate, toluylene diisocyanate, 1,5-naphthalene diisocyanate, diphenylmethane-4,4'-diisocyanate, isophorone diisocyanate, xylylene diisocyanate, p-phenylene diisocyanate, 1,3,6-hexamethylene triisocyanate, bicycloheptane triisocyanate, etc. In addition, also usable are terminal isocyanate group-containing compounds, etc. which are obtained by reacting such polyfunctional isocyanate compounds and active hydrogen compounds. As examples of such compounds, mentioned are terminal isocyanate group-containing adducts to be obtained by the reaction of toluylene diisocyanate and trimethylolpropane; terminal isocyanate group-containing adducts to be obtained by reaction. of toluylene diisocyanate and pentaerythritol, etc. However, the present invention is not limited to these.

The latent hardener for use in the present invention can be obtained easily by mixing (a) an epoxy compound or isocyanate compound and (b) an amine compound, such as those mentioned above, or by mixing (a) an epoxy compound or isocyanate compound, (b) an amine compound and (c) an active hydrogen compound, such as those mentioned above, so as to react them at temperatures in the range of between room temperature and 200°C, followed by solidifying and grinding the reaction product; or by reacting the components in a solvent such as methyl ethyl ketone, dioxane, tetrahydrofuran or the like, followed by removing the solvent from the reaction product and then grinding the product.

Typical examples of commercial products of the solid-dispersing amine-adduct-type latent hardener for use in the present invention are mentioned below, which, however, are not to limit the present invention.

As examples of amine-epoxy adduct type hardeners, mentioned are "Ajicure PN-23" (trade name, produced by Ajinomoto Co.), "Ajicure PN-H" (trade name, produced by Ajinomoto Co.), "Ajicure MY-24" (trade name, produced by Ajinomoto Co.), "Hardener H-3615S" (trade name, produced by ACR Co.), "Hardener H-3293S" (trade name, produced by ACR Co.), "Novacure HX-3721" (trade name, produced by Asahi Chemical Co.), "Novacure HX-3742" (trade name, produced by Asahi Chemical Co.), "Ancamine 2014AS" (trade name, produced by Pacific Anchor Chemical Co.), "Ancamine 2014FG" (trade name, produced by Pacific Anchor Chemical Co.), etc. As examples of urea-type adducts, mentioned are "Fujicure FXE-1000" (trade name, produced by Fuji Chemical Co.), "Fujicure FXR-1030" (trade name, produced by Fuji Chemical Co.), etc.

As examples of the titanium alkoxides to be used in the present invention, mentioned are tetramethyl titanate, tetraethyl titanate, tetra-n-propyl titanate, tetra-isopropyl titanate, tetra-n-butyl titanate, tetra-isobutyl titanate, tetra-tert-butyl titanate, tetra-n-pentyl titanate, tetra-n-hexyl titanate, tetra-isooctyl titanate, tetra-n-lauryl titanate, and their oligomers, etc., which, however, are not intended to limit the present invention. Of these, especially preferred is tetra-isopropyl titanate.

As examples of the zirconium alkoxides to be used in the present invention, mentioned are tetraethyl zirconate, tetra-n-propyl zirconate, tetra-isopropyl zirconate, tetra-n-butyl zirconate, tetra-sec-butyl zirconate, tetra-tert-butyl zirconate, tetra-n-pentyl zirconate, tetra-tert-pentyl zirconate, tetra-tert-hexyl zirconate, tetra-n-heptyl zirconate, tetra-n-octyl zirconate, tetra-n-stearyl zirconate, and their oligomers, etc., which, however, are not limitative with respect to the present invention.

The amount of these metal alkoxides in the epoxy resin composition of the present invention is from 0.1 to 10 parts by weight, preferably from 0.1 to 5 parts by weight, per 100 parts by weight of the epoxy resin in the composition. If the amount is too small, the storage stability of the composition is lowered, but, on the contrary, if it is too large, the curing speed of the epoxy resin in the composition is lowered.

The epoxy-resin composition of the present invention may contain, if desired, various additives such as a filler, diluent, solvent, pigment, flexibility-imparting agent, coupling agent, antioxidant, etc.

The cured products to be obtained by curing the composition of the present invention have excellent properties and, therefore, the composition of the present invention can be used in various fields, such as for adhesives, coating materials, electrical insulating materials, laminated structures, etc. because of the excellent properties achieved in the curing step.

### Examples

Next, the present invention will be described in more detail by means of the following examples. In the following examples, samples were stored in a thermostat at a pre-determined temperature (40°C), while the number of days was counted before each of the stored samples lost its fluidity, thereby determining the storage stability of each sample. In these experiments the gelling time of each sample was measured at 80°C or 100°C using a Yasuda Gel Timer, thereby determining the curability of each sample. The viscosity of each sample was measured according to JISK 6833. In these examples, parts are parts by weight.

### Examples 1 to 6:

To 100 parts of bisphenol-F-type epoxy resin "Epikote (EP)-807" (trade name, produced by Yuka-Shell Epoxy Co.), added were 20 parts of "Ajicure PN-23" and 1 part of Aerosil 200 (trade name, produced by Nippon Aerosil Co.; fine particles of silica) and mixed at room temperature. To the resulting mixture were added, as a metal alkoxide, 1 part of tetraethyl titanate, 1 part of tetra-isopropyl titanate, 1 part of tetra-n-propyl titanate, 1 part of tetra-n-butyl titanate, 1 part of tetra-isopropyl zirconate or 2 parts of tetra-isopropyl titanate and mixed at room temperature to obtain epoxy-resin compositions. The gelling time and the storage stability of these compositions are shown in Table 1.

### Comparative Examples 1 and 2:

Epoxy-resin compositions were prepared in the same manner as in Examples 1 to 6, except that one part of mono-s-butoxyaluminium diisopropylate (AMD) was used as the metal alkoxide or no metal alkoxide was added. The compositions were tested in the same manner as above. The results are shown in Table 1.

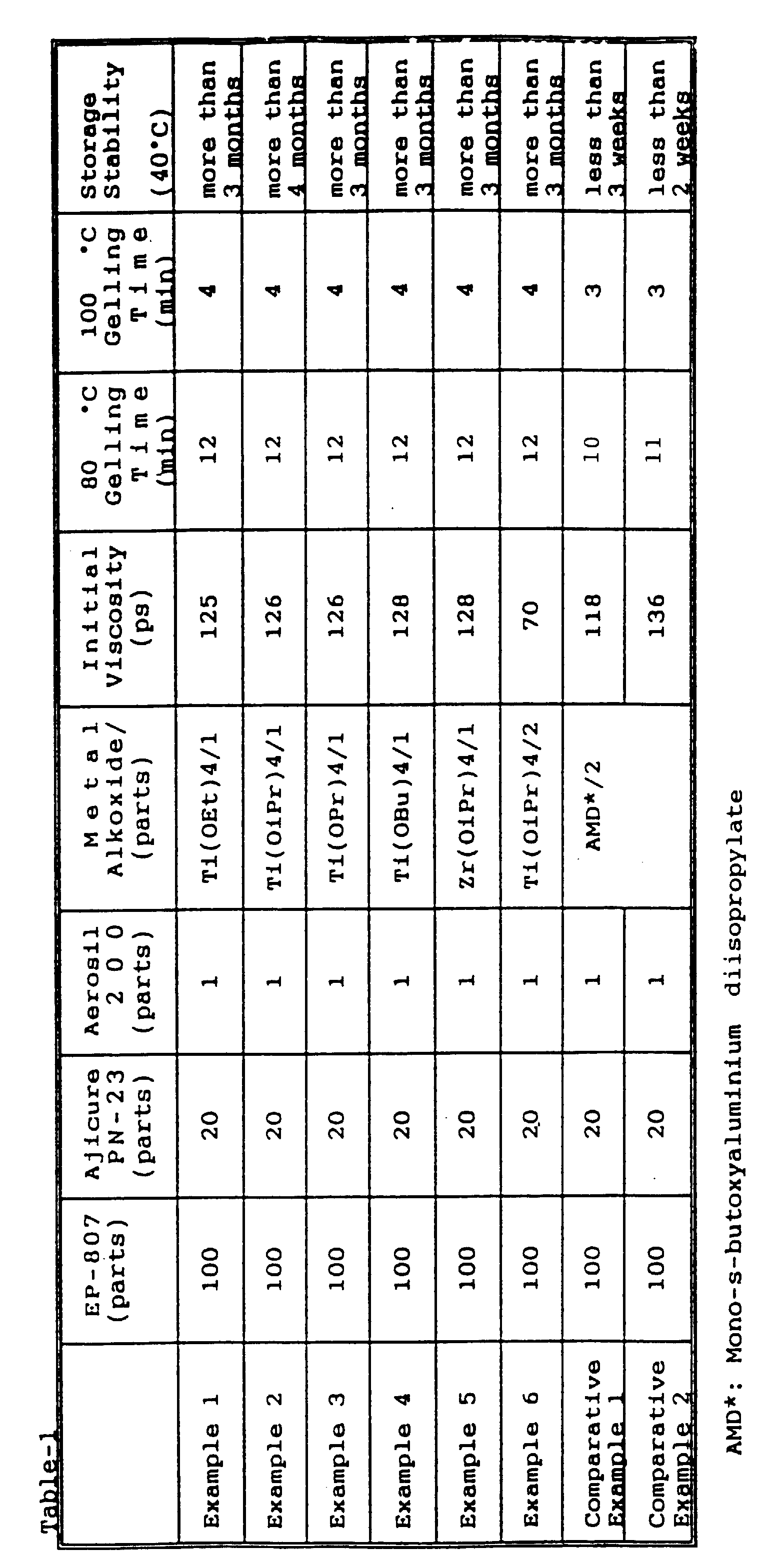

### Examples 7 and 8:

To 80 parts of bisphenol-A-type epoxy resin "EP-828" (trade name, produced by Yuka Shell Epoxy Co.) added were 20 parts of a reactive diluent; and 20 parts of a latent hardener and 1 part of Aerosil 200 were added thereto and mixed. To the resulting mixture was added 1 part of tetra-isopropyl titanate and mixed at room temperature. Thus, epoxy-resin compositions were obtained. The gelling time and the storage stability of these compositions are shown in Table 2.

### Comparative Examples 3 and 4:

20 parts of a reactive diluent were added to 80 parts of "EP-828", and 20 parts of a latent hardener and 1 part of Aerosil 200 were added thereto and mixed at room temperature. Thus, epoxy-resin compositions were obtained. The gelling time and the storage stability of these compositions are shown in Table 2.

**Table 2**

| | Examples | | Comparative Examples | |
|---|---|---|---|---|
| | 7 | 8 | 3 | 4 |
| EP-828 | 80 | 80 | 80 | 80 |
| Cardula E | 20 | | 20 | |
| EX-201 | | 20 | | 20 |
| Fujicure FXE-1000 | 20 | | 20 | |
| Ajicure PN-23 | | 20 | | 20 |
| Aerosil 200 | 1 | 1 | 1 | 1 |
| Ti(OiPr)₄ | 1 | 1 | | |
| 80 °C Gelling Time (min) | 9 | 11 | 8 | 10 |
| 100 °C Gelling Time (min) | 4 | 4 | 4 | 3 |
| Storage Stability (40 °C) | more than 2 months | more than 2 months | less than 2 weeks | less than 1 month |

### Reactive Diluent

### Cardula E:

Glycidyl Ester of a Tertiary Carboxylic Acid of the formula 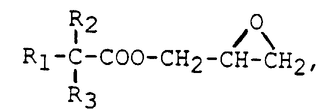 wherein R₁, R₂ and R₃ are saturated alkyl groups and at least one of them is methyl, the total number of C-atoms in R₁, R₂ and R₃ being 8 (trade name, produced by Yuka Shell Epoxy Co.)

### EX-201:

Diglycidyl Ester of Resorcinol (trade name, produced by Nagase Chemical Co.)

### Advantages of the Invention

The one-liquid-type epoxy-resin composition of the present invention is obtained by merely adding metal alkoxide(s) to a composition comprising an epoxy resin and a hardener and mixing them at room temperature, and this satisfies both the storage stability and the cold curability, which could hardly be satisfied by conventional epoxy-resin compositions. Specifically, the resin composition of the present invention can be stored stably at 40°C for 3 months or more and can be cured at from 80 to 100°C within 15 minutes. Regarding these characteristics the resin composition of the present invention is superior to conventional one-liquid-type epoxy-resin compositions that have heretofore been proposed. In addition, as the composition of the present invention contains metal alkoxide(s), it can maintain the good storage stability even when additives such as a diluent, etc. that will noticeably lower the storage stability are added thereto.

## Claims

1. An epoxy resin composition containing, as essential components, (1) an epoxy resin having two or more epoxy groups in one molecule, with the exclusion of epoxy resins having a 1,2-epoxy group in a five-membered ring, (2) a solid-dispersing amine-adduct-type latent hardener, which is a solid insoluble in epoxy resins at room temperature, while being soluble in epoxy resins under heat to function as a hardener for said epoxy resins, and (3) titanium and/or zirconium alkoxide(s) with the proviso that said titanium alkoxides do not contain groups other than alkoxide groups.

2. The epoxy resin composition as claimed in claim 1, in which the amount of the metal alkoxide(s) is from 0.1 to 10 parts by weight per 100 parts by weight of the epoxy resin having two or more epoxy groups in one molecule.

## Patentansprüche

1. Epoxyharzzusammensetzung, die als wesentliche Bestandteile
(1) ein Epoxyharz mit zwei oder mehr Epoxygruppen in einem Molekül, wobei Epoxyharze mit einer 1,2-Epoxygruppe in einem 5-gliedrigen Ring ausgeschlossen sind,
(2) einen im Festzustand dispergierenden latenten Härter vom Aminaddukt-Typ, welcher ein Feststoff ist, der bei Raumtemperatur in Epoxyharzen unlöslich ist, während er unter Erhitzen in Epoxyharzen löslich ist, wobei er als Härter für die Epoxyharze wirkt, und
(3) Titan- und/oder Zirkoniumalkoxid(e) enthält, mit der Maßgabe, daß die Titanalkoxide keine Gruppen enthalten, die nicht Alkoxidgruppen sind.

2. Epoxyharzzusammensetzung gemäß Anspruch 1, in der die Menge des/der Metalloxid(e) 0,1 bis 10 Gew.-Teile pro 100 Gew.-Teile des Epoxyharzes mit zwei oder mehr Epoxygruppen in einem Molekül ist.

## Revendications

1. Composition de résine époxy contenant, en tant que composants essentiels, (1) une résine époxy ayant par molécule deux groupes époxy ou plus, à l'exclusion des résines époxy ayant un groupe 1,2-époxy dans un cycle pentagonal, (2) un durcisseur latent, du type produit d'addition d'amine, solide se dispersant, constitué par un solide insoluble dans les résines époxy à la température ambiante, tout en étant soluble dans les résines époxy à chaud pour servir de durcisseur pour lesdites résines époxy et (3) un ou des alcoolates de titane et/ou de zirconium sous réserve que lesdits alcoolates de titane ne contiennent pas de groupes autres que des groupes alcoolates.

2. Composition de résine époxy selon la revendication 1, dans laquelle la quantité d'alcoolate(s) métallique(s) est de 0,1 à 10 parties en masse pour 100 parties en masse de résine époxy ayant deux groupes époxy ou plus par molécule.
